# EUROPEAN PATENT SPECIFICATION

(11) **EP 4 625 281 B1**
(45) Date of publication and mention of the grant of the patent: **21.10.2026**
(21) Application number: 25154876.4
(22) Date of filing: 30.01.2025
(51) Int. Cl.: G06Q 10/06

(54) **SYSTEM AND METHOD FOR OPTIMIZING INFRASTRUCTURE**
SYSTEM UND VERFAHREN ZUR OPTIMIERUNG EINER INFRASTRUKTUR
SYSTÈME ET PROCÉDÉ D'OPTIMISATION D'INFRASTRUCTURE

(30) Priority: 27.03.2024 US 202463570509 P; 10.04.2024 US 202463632062 P
(43) Date of publication of application: 01.10.2025
(73) Proprietor: SITA Information Networking Computing UK Limited, Hayes, Middlesex UB3 1BW (GB)
(72) Inventor: Malinofsky, Andy, Atlanta, 30339 (US); Lawton, Gareth, Hayes, UB3 1BW (GB); Ryan, Sid, Montreal, H3A 1G1 (CA)
(74) Representative: Reddie & Grose LLP

(56) References cited:
- WO-A2-2008/063238
- CN-A- 111 554 127

## Description

### FIELD OF THE INVENTION

This invention relates to systems and methods for optimizing infrastructure, such as transport infrastructure. It is particularly, but not exclusively, concerned with optimizing various interrelated functions of transport infrastructure such as airports, seaports, train stations, other transportation hubs or travel termini.

### BACKGROUND OF THE INVENTION

Conventional practices in the travel and transportation industry heavily rely on human expertise and experience for management and planning. Decision-making processes are predominantly informed by an operator's prior encounters with similar scenarios and the general knowledge of planners. Decisions are susceptible to individual biases and subjective judgments of planners. Manual processes are time-consuming and often fail to consider all relevant factors simultaneously, leading to suboptimal plans. Human-centric systems struggle to swiftly adapt to changing conditions or unforeseen events. Automation is limited, resulting in plans that may not be optimized according to specific criteria.

Human operators frequently utilize their experience to allocate stands and manage connections, often without a data-driven approach. For example, stand allocation decisions may lack optimization for passenger experience, as human intuition may not consistently lead to the most efficient stand allocation that for example minimizing walking times, maximizing revenue generation, or reducing fuel consumption. Similarly, the relocation decisions to increase retail sales may not be optimized to reduce the likelihood of missed connections. Relying on human judgment may result in missed opportunities to enhance passenger experience through data-driven insights.

Manual stand allocation is primarily based on the expertise of airport staff, utilizing their knowledge of stand properties. The absence of specific data on stand costs hampers the development of a sophisticated, data-driven solution, particularly when indirect factors significantly impact costs. Configuring stands manually relies on domain expert knowledge and may struggle to adapt to changing conditions. Rule-based systems may not fully optimize stand usage, resulting in suboptimal plans.

Existing airport management and optimization systems typically rely on manual planning and decision-making by airline and airport experts, incorporating historical data.

We have appreciated that existing systems and methods for optimizing various aspects of travel and transportation operations are subject to oversights, resulting in incomplete assessments of past events and of all relevant information. Furthermore, such systems are also subject to subjective biases and inconsistencies. Therefore, a system and a method for overcoming these challenges by offering a data-driven, intelligent solution for optimizing various aspects of travel and transportation operations, as well as fostering sustainability and enhancing overall efficiency in the industry are desired.

Although this problem has been explained in the context of airport optimization systems and methods, one or more solution provided by the present invention may be applicable to any travel and transport infrastructure such as airports, seaports, train stations, other transportation hubs or travel termini, as well as other industries such as logistics.

WO 2008/063238 A2 discloses a method for providing an enterprise with a situational awareness for conditions related to aircraft departure. The method includes receiving data related to one or more events that have the potential to affect conditions related to an aircraft's departure from a plurality of enterprise related systems, correlating the received data in accordance with one or more business rules, generating an aircraft departure situational awareness data set from the correlated data, processing the aircraft departure situational awareness data set in view of at least one user profile, and providing at least one recommendation, each recommendation associated with one user profile, directed to addressing the conditions related to aircraft departure.

CN 111 554 127 A discloses systems and methods for allocating flights to aircraft parking spaces. In one example aspect, a system includes one or more computing devices. The computing device is configured to generate a bay recovery plan that reassigns flights to available aircraft bays after a flight schedule disruption. Flights associated with aircraft stand conflicts may be reassigned to aircraft available within the determined time slot by ensuring that the available aircraft stand meets one or more scheduling constraints or criteria and based at least in part on the determined weighted total travel time parking space. The weighted total travel time takes into account the estimated travel time between aircraft stands and/or their associated gates as well as transfer times between flights. Once an aircraft stand is reassigned to a flight associated with an identified aircraft stand conflict, a stand recovery plan can be generated in real-time.

### SUMMARY OF THE INVENTION

The invention is defined in the independent claims to which reference is now directed. Optional features are detailed in the dependent claims

According to a number of embodiments, the present disclosure relates to systems and methods for optimizing one or more functions of transport infrastructure.

According to a first aspect of the invention, a method for optimizing stand planning is provided. The method comprises steps of: a. receiving one or more priority parameters for consideration in the stand planning, wherein each of the priority parameters comprises a weighting, and is associated with one or more airport functions; b. receiving an existing, first stand plan from an existing, first stand planning optimization system, wherein the first stand plan comprises data relating to flights and their allocated stands; c. generating a recommended, second stand plan by a second stand planning optimization system, wherein the second stand plan is generated by modifying the first stand plan in order to allocate stands to the flights according to the priority parameters, using a prediction module comprising one or more models; d. transmitting the second stand plan from the second stand planning optimization system to the first stand planning optimization system; and e. updating the first stand plan based on the second stand plan.

Optionally, one or more existing rules relating to the one or more airport functions may be retrieved prior to the step of generating the second stand plan.

Optionally, the second stand plan may be generated to avoid conflicts with the existing rules.

Optionally, the one or more existing rules relating to the one or more airport functions may be retrieved from an external database associated with the airport.

Optionally, the one or more priority parameters may be retrieved from a rule-based database associated with the airport.

Optionally, the one or more priority parameters may be retrieved via a user input or from a database.

Optionally, the method may further comprise a step of: f. transmitting directions for controlling an aircraft to a stand according to the second plan.

According to a second aspect of the invention, a method for prioritizing the one or more priority parameters in the method according to the first aspect of the invention, wherein the weighting of the each of the priority parameters is dynamically adjustable by the user.

Optionally, during the adjustment the of the weighting, changes of the one or more airport functions of the corresponding parameter may be displayed to the user.

Optionally, the changes of the one or more airport functions of the corresponding parameter may be displayed in forms of sub-parameters having numerical values.

According to a third aspect of the invention, a system for optimizing stand planning comprising: a receiver for receiving one or more priority parameters for consideration in the stand planning, wherein each of the priority parameters comprises a weighting, and is associated with one or more airport functions, and receiving an existing, first stand plan from an existing, first stand planning optimization system, wherein the first stand plan comprises data relating to flights and their allocated stands; a processor for generating a recommended, second stand plan by a second stand planning optimization system, wherein the second stand plan is generated by modifying the first stand plan in order to allocate stands to the flights according to the priority parameters, using a prediction module comprising one or more models; and a transmitter for transmitting the second stand plan from the second stand planning optimization system to the first stand planning optimization system for updating the first stand plan based on the second stand plan.

According to a fourth aspect of the invention, a prediction module for use in the method for optimizing stand planning according to the first aspect or the system according to the third aspect of the invention is provided. The prediction module comprises a plurality of machine learning models. Each of the machine learning models is connected to one or more data sources, and is trained to perform prediction of one or more consequences of a one or more decisions based on historical data from the one or more data sources. The one or more consequences predicted by the machine learning models relate to a plurality of airport functions.

Optionally, the second stand plan may be selected from one or more candidate second stand plans that satisfy the priority parameters, based on the one or more decisions and the consequences according to the prediction by the machine leaning models.

Optionally, the second stand plan may be associated with the fewest negative consequences according to the predictions by the machine learning models.

According to a fifth aspect of the invention, a method for optimizing infrastructure is provided. The method comprises steps of: a. receiving one or more priority parameters for consideration for optimization, wherein each of the priority parameters relates to a target aspect of the infrastructure associated with one or more functions of the infrastructure and comprises a weighting; b. receiving an existing, first optimization plan from an existing, first optimization system, wherein the first optimization comprises data relating to the target aspect(s); c. generating a recommended, second optimization plan by a second optimization system, wherein the second optimization plan is generated by modifying the first optimization plan in order to optimize the target aspect(s) according to the weighting(s), using a prediction module comprising one or more models; d. transmitting the second optimization plan from the second optimization system to the first optimization system; and e. updating the first optimization plan based on the second optimization plan.

Optionally, one or more existing rules relating to the one or more functions of the infrastructure may be retrieved prior to the step of generating the second optimization plan.

Optionally, the second optimization plan may be generated to avoid conflicts with the existing rules.

Optionally, the one or more existing rules relating to the one or more function of the infrastructure may be retrieved from an external database associated with the infrastructure.

Optionally, the one or more priority parameters may be retrieved from a rule-based database associated with the infrastructure.

Optionally, the one or more priority parameters may be retrieved via a user input or from a database.

According to a sixth aspect of the invention, a method for prioritizing the one or more priority parameters in the method according to the fifth aspect of the invention, wherein the weighting of the each of the priority parameters is dynamically adjustable by the user.

Optionally, during the adjustment the of the weighting, changes of the one or more functions of the infrastructure of the corresponding parameter may be displayed to the user.

Optionally, the changes of the one or more functions of the airport of the corresponding parameter may be displayed in forms of sub-parameters having numerical values.

According to a seventh aspect of the invention, a system for optimizing infrastructure is provided. The system comprises a. a receiver for receiving one or more priority parameters for consideration for optimization, wherein each of the priority parameters relates to a target aspect of the infrastructure associated with one or more functions of the infrastructure and comprises a weighting receiving an existing, first optimization plan from an existing, first optimization system, wherein the first optimization comprises data relating to the target aspect(s); b. a processor for generating a recommended, second optimization plan by a second optimization system, wherein the second optimization plan is generated by modifying the first optimization plan in order to optimize the target aspect(s) according to the weighting(s), using a prediction module comprising one or more models; and c. a transmitter for transmitting the second optimization plan from the second optimization system to the first optimization system for updating the first optimization plan based on the second optimization plan.

According to an eighth aspect of the invention, a prediction module for use in the method according to the fifth aspect of the invention or the system according to the seventh aspect of the invention is provided. The prediction module comprises a plurality of machine learning models, each of the machine learning models is connected to one or more data sources, and is trained to perform prediction of one or more consequences of a one or more decisions based on historical data from the one or more data sources, and the one or more consequences predicted by the machine learning models relate to a plurality of functions of the infrastructure.

Optionally, the second optimization plan may be selected from one or more candidate second optimization plans that satisfy the priority parameters, based on the one or more decisions and the consequences according to the prediction by the machine leaning models.

Optionally, the second optimization plan is associated with the fewest negative consequences according to the predictions by the machine learning models.

Optionally, one or more of the methods according to any of the aspects above may further comprise a step of transmitting directions.

Optionally, the directions may be for any one or more of: controlling an aircraft to a stand according to the second plan; controlling allocation of security lanes according to the second plan; controlling opening and/or allocation of resources at one or more areas of the infrastructure according to the second plan; controlling times for one or more information announcements according to the second plan; controlling routing for one or more user of the infrastructure according to the second plan; controlling energy usage in one or more areas of the infrastructure according to the second plan; and/or controlling schedules and/or allocation of resources for maintenance and/or cleaning schedules according to the second plan.

Optionally, one or more of the methods according to any of the aspects above may be implemented as a computer program product which, when executed, undertakes the corresponding method.

### BRIEF DESCRIPTION OF THE DRAWINGS

An embodiment of the invention will now be described, by way of example only, and with reference to the accompanying drawings, in which:
Figure 1 is a schematic diagram of an example system for stand planning according to an embodiment;
Figure 2 is a schematic diagram of an example user interface according to an embodiment;
Figure 3 is a schematic diagram of an example optimization model according to an embodiment according to an embodiment;
Figure 4 illustrates (a) an example initial graph and (b) an example final graph according to an embodiment;
Figure 5 illustrates an example graph with fixed and safe nodes according to an embodiment;
Figure 6 illustrates example graphs of 9 to 4 split degrees according to an embodiment;
Figure 7 illustrates (a) an example final graph without fixed components and (b) an example graph without unfixable components according to an embodiment;
Figure 8 is a schematic diagram of an exemplary system according to an embodiment; and
Figure 9, with partial process diagrams Figure 9A and Figure 9B, illustrates a process diagram of an example optimization process according to an embodiment. The relative positions of the partial process diagrams is provided by Figure 9.

### DETAILED DESCRIPTION

Navigating the interconnected events within complex systems, notably the aviation, travel, and transportation industry, preferably requires an intricate and holistic approach to problem-solving. For example, the goal of reducing emissions in an aircraft is a challenge that traditional machine learning predictive models often struggle to address comprehensively. Sustainability improvements preferably need a holistic perspective, as attempting to optimize a single factor in isolation may inadvertently trigger unintended consequences. For instance, efforts to enhance fuel efficiency might unwittingly may lead to heightened security line congestion at airports and, paradoxically, escalate electricity consumption resulting in exacerbation of pollution production. Understanding such intricate relationships is important, as rectifying one issue may disturb the delicate equilibrium among various interconnected factors, thereby impacting aspects such as retail sales, risk levels, missed flights, and the overall passenger experience. In other words, isolated improvements can result in unforeseen negative cascading effects.

Considering another example of improving electricity consumption, interconnected factors may include pollution levels but also may influence the interconnected systems of retail sales, risk mitigation, and passenger experience. Such interconnectedness further indicate that a mere focus on singular improvements, without considering their repercussions across the network of interdependencies, can lead to suboptimal outcomes and unintended trade-offs.

The following exemplary description is based on a system, apparatus, and method for use in the aviation industry to provide solutions to problems such as one or more problems described above. However, it will be appreciated that the invention may find application outside the aviation industry and in any industry, such as in other travel industry, packaging or delivery industry, in which items such as bags, suitcases, packaged items, parcels, or mails are transported. Thus, embodiments of the invention find application in the travel industry in general, such as rail, coach, car, vessel, as well for delivery and courier services.

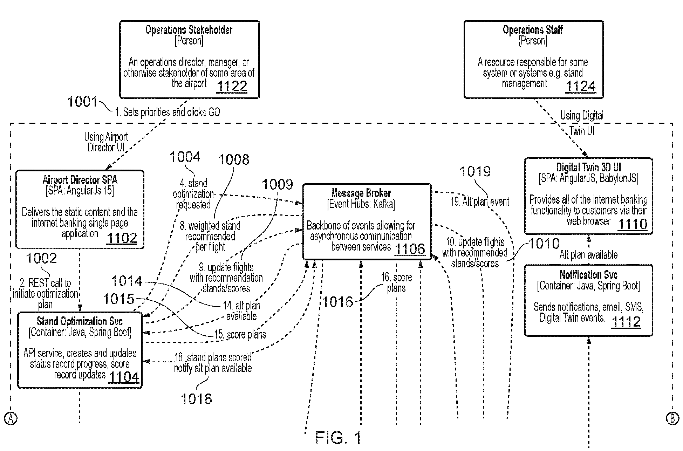

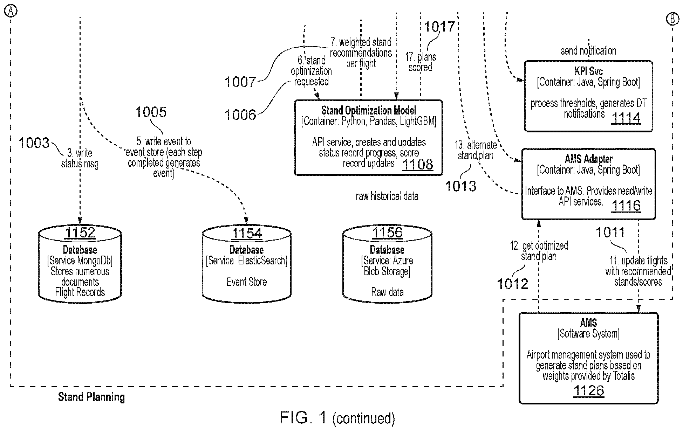

Figure 1 illustrates a schematic diagram of an exemplary system for stand planning according to an embodiment. The system and method for optimizing transport infrastructure according to the invention is described below in relation to the example of Figure 1 relating to stand planning at an airport. However, it will appreciated by one of skill in the art that the principle described is applicable for optimizing any suitable function(s) and/or aspect(s) of any types and forms of transport infrastructure, such as airports, seaports, train stations, other transportation hubs or travel termini.

As shown in Figure 1, an interface 1102 may be provided for a user to set 1001 one or more priorities prior to initiating 1002 a stand optimization plan. Alternatively, the one or more priorities may be set 1001 at the same time as initiating the stand optimization plan. The one or more priorities may be set by a user (e.g. an operations director, manager, or other stakeholder of the airport or one or more areas of the airport). For example, an airport stakeholder looking to optimize the airports stand plan for a schedule, may set the one or more priorities accordingly.

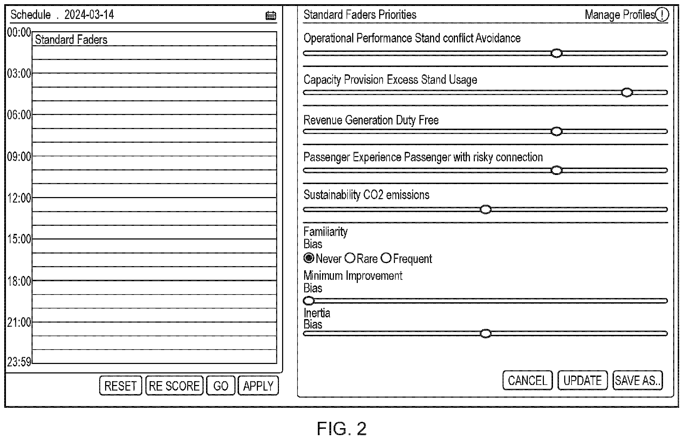

The one or more priorities may be set via an interface 1102. Figure 2 shows an exemplary interface1102 for setting the one or more priorities. The interface may enabling balancing of the one or more priorities. Optionally, the priorities may be are balanced via the use of faders. For example, in the partial view of the Airport Director user interface 1102 shown in Figure 2, the farther right the fader is set, the higher priority the user is given to that priority. Therefore the user may, for a specified time period, balance and/or weight the one or more priorities using the user interface or via any other suitable way of receiving user input. In the example of Figure 2, the user have balanced and/or weighted the one or more priorities for the date of March 14, 2024 in order to:
- prioritize capacity provision over all other key performance indicators;
- set the operational performance, revenue generation and passenger experience at a lesser value (vs capacity provision), but equal to each other; and
- set the sustainability value to the lesser of all values, indicating that this KPI is less valuable during this period than other priorities.

Such an interface may be provide via web and/or be in a form of an application. The application may, for example, be a Single Page Application (SPA) that is suitable for providing dynamically updated content without the needs for refreshing the entire page or redirecting to another web page for data retrieval. The stand optimization plan may be initiated 1002 via a REST call which in turn initiates a Stands Optimization Service.

For example, upon confirmation (e.g. by clicking GO or Apply in the interface), the system may trigger a REST API request to the Stand Optimization service. Optionally, the Airport Director web application may trigger the REST API request to the Stand Optimization service. An example JSON request is as follows:

| |
|---|
| ``` { "standOptReqDate": "2023-07-08", "tenantld": "XYY", "rescoring": false, "schedules": [ { "fromTime": "00:00", "toTime": "23:59", "id": null, "profile": { "id": "65e22d4a4b3d4327a29ee7f9", "profileName": "Default", "profileDescription": "Default profile", "priorities": { "OPERATIONAL_PERFORMANCE": 0, "CAPACITY_PROVISION": 7, "REVENUE_GENERATION": 7, "PASSENGER_EXPERIENCE": 2, "SUSTAINABILITY": 3, "FAMILIARITY": 5, "CONFIDENCE": 0, "INERTIA": 5 } } } ] } ``` |

As shown in the example JSON request above, the numerical representation may be a corollary of the fader positions (e.g. given a range of min 0 to max 10). Optionally, the schedule element for indicating the time period may be an array, and that each node in the array may have a start time and end time. Optionally, schedules may contain more than one profile per day. For example, during peak traffic hours, the airport may prioritize operation performance over other KPI's, whereas, during off peak hours, sustainability and revenue may be prioritized. This may be implemented in the JSON request using multiple nodes within the schedules array.

The Stand Optimization Service may receive the request and begin an orchestration process. This process may be initiated by generating and persisting a contextual document to track the process. An example of this document is as follows:

| |
|---|
| ``` { "correlationld": "dcaf5aee-dc62-49b0-8b93-bdf21f141d73", "status": "INITIATED", "tenant": "XYY", "createdDateTime": "2024-03-05T15:00:08.920+0000", "updatedDateTime": "2024-03-05T15:08:32.394+0000", "createdBy": "joe,creator@sita.aero", "standPlanRequestDate": "2023-07-22", "weights": [ { "profileld": "6a9e8ac3-b029-43a7-903c-e9f20cc02f3c", "startTime": "00:00", "endTime": "23:59", "weights": { "familiarity": 0, "inertia": 5, "passenger_experience": 7, "operational_performance": 7, "sustainability": 5, "confidence_threshold": 0, "capacity": 8, "revenue_generation": 8 ], ``` |
| ``` "alternateStandPlanURL": "totalis/yyz/dev/AlternateStandPlans/July-2023/dcaf5aee- dc62-49b0-8b93-bdf21f141d73_2023-07-22.json", "baselineStand PlanU RL": "totalis/yyz/dev/BaselineStandplans/July-2023/2023-07- 22.json" } ``` |

In the example document above, the correlationld is a key element in tracking the process, both during and after completion. Several documents may be generated during the lifetime of the process. The correlationld may be binding element across all of them. By searching the document repository using the correlation id as key, the entire dictionary of artifacts may be made available. The id may be embedded in the base and alternate stand plan URL's. The status may be initially set as "INITIATED" and be updated by the service as the process progresses. The schedule and corresponding profiles and settings may be included in the document.

The Stands Optimization Service may be in a form of an API service. The Stands Optimization Service may be configured to record create, record and/or update status message in a database of flight records and relevant documents. Such creations, recordals, and updates may be performed by transmitting 1003 a message (e.g. status message) to the database. The Stand Optimization Service may also be configured to create, record and/or update events in a database of event records. Therefore, the Stand Optimization Service may create, record and/or update 1005 events for each completed steps of stand optimization process in the database.

The Stand Optimization Service then transmits 1004, 1006 a stand optimization request to a Stand Optimization Model. As shown in Figure 1, the stand optimization request may be sent 1004, 1006 to the Stand Optimization Model via a Message Broker module. The message Broker may be configured to enable asynchronous communication between different service(s), model(s), module(s), adapter(s), interface(s), and/or system(s). Alternatively, the stand optimization request from the Stand Optimization Service may be directly sent 1004, 1006 to the Stand Optimization Model.

An example message that may be created by the Stand Optimization Service and sent via the message broker to the Stand Optimization Model is shown below:

| |
|---|
| ``` { "standPlan": { ``` |
| ``` "standPlanld": "43dfflee-2f7e-4da6-a048-28d0f06996fd", "standPlanUrl": "totalis/xyz/dev/BaselineStandplans/July-2023/2023-07-05.json" }, "date": "2023-07-05", "profiles": [ { "profileld": "f2ec977e-0119-4167-ae8e-85368ac14789", "startTime": "00:00", "endTime": "23:59", "weights": { "operational Performance": 7, "passengerExperience": 7, "capacity": 9, "revenueGeneration": 7, "sustainability": 9, "inertia": 5 } } ] } ``` |

As shown in this example, the message may contain a link to the baseline stand plan (e.g. a plan generated by the airport itself) and the list of priority settings per time slice for the date also indicated in the message.

Although the messages are exchanged via a message broker in the example shown in Figure 1, it will be appreciated that the message broker is an optional feature and any other suitable method for exchanging messages may be used. For example, the messages may alternatively be exchanged by using HTTP/REST (request-reply pattern).

As mentioned above, message requests and responses may be saved 1005 in the message store 1154 for later analysis.

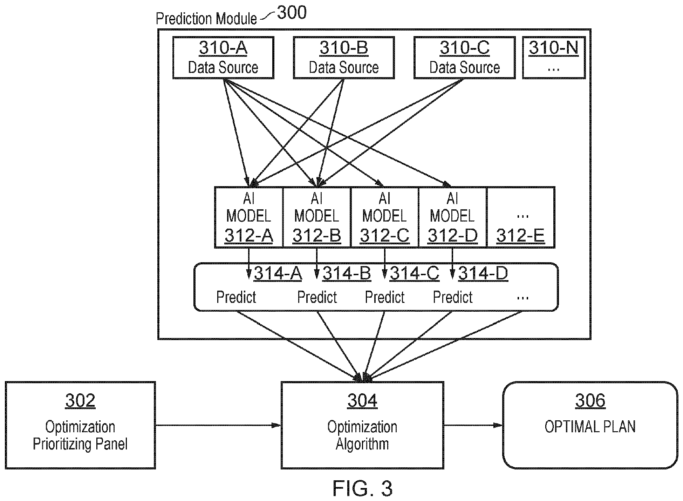

The stand optimization request may be sent 1006 to the Stand Optimization Model ("the model") 1008. The model 1108 may be configured to function as a container which houses the various machine learning models. The model 1108 is described further in relation to Figure 3.

During this step, the model may generate one or more recommended stands to place each flight on. The model may use the baseline stand plan as starting point. Each set of recommendations per flight or flights ("linked flights" may be an arrival / departure pair) contain lists of stands and associated weights, the original stand, and a delayed flight prediction.

The results generated from the model 1108 may be sent 1007 to the message broker ("the broker") 1106. However, it will be appreciated that, alternatively or additionally, the results generated from the model 1108 may directly be sent to the Stand Optimization Service 1104.

The results may be sent as a message format. An example of such a message is provided below:

| |
|---|
| ``` { "link_id": "arr_SIT0701_2023-07-14 07:40:00.000_dep_SIT0591_2023-07-14 08:30:00.000", "arrival": { "flight_id": "SIT0701", "direction": "arr", "scheduled_time": "2023-07-14 07:40:00", "stand": "165", "slot_start": "2023-07-14 07:40:00", "slot_end": "2023-07-14 08:30:00" }, "departure": { "flight_id": "SIT0591", "direction": "dep", "scheduled_time": "2023-07-14 08:30:00", "stand": "165", "slot_start": "2023-07-14 07:40:00", "slot_end": "2023-07-14 08:30:00" }, "stand_scores": [ { "stands": [ "101", ``` |
| ``` "101A", "103", "103A", "105", "105A", "107", "107A", "109", "109A" ], "score": 0.25798526 }, { "stands": [ "120", "120A", "131" ], "score": 0.36855036 }, { "stands": [ "122", "135", "136" ], "score": 0.2948403 }, { "stands": [ "132", "133", "134", "134A" ], "score": 0.33169532 }, ``` |
| ``` { "stands": [ "139", "139A", "140", "141" ], "score": 0.22113022 { "stands": [ "151", "153", "155", "157" ], "score": 0.4054054 { "stands": [ "165" ], "score": 0.125 ], "departure_delay": 0 ``` |

As shown in this example, the message may specify that the aircraft is associated with an arrival and a departure flight (as can be seen in both the link id and the two elements detailing the arrival and departure flights). Along with the scheduled time of arrival/departure, the stand allocated by the airport and the slot allocation time (the time the aircraft arrives at the stand until the time it departs) may also be included in the message.

Furthermore, a list of arrays may be included in the message. In such cases, each array may have a list of stands and a score. The arrays may be used in the following steps to calculate the rules which may be sent to the Stand Planning Service 1126. The Stand Planning Service 1126 may be, be a part of, or include an Airport Management System (AMS).

The departure_delay element (with value 0 in the example above) may contain the number of minutes the model has predicted a departure flight will be delayed. This data may also be used in the following steps.

Stand Optimization Service 1104 may consume 1008 the recommendations generated by the model 1108 and map the score(s) to soft rule(s) configured in the Stand Planning Service 1126. An example of such mapping is provided in *Table 1:*

**Table 1 Example mapping of scores and soft rules**

| AMS Soft Rule Name | Model Range Score |
|---|---|
| Alternative_Stands_1 | 0.9 to 1.0 |
| Alternative_Stands_2 | 0.8 to 0.9 |

Each flight may be mapped accordingly and the list may be published to the broker 1106.

The broker 1106 may receive 1009 the AMS Flight rules.

The broker 1106 may send the data including the recommended stands and scores 1010, 1011 to the stand planning service 1126. Such data may be sent 1010, 1011 via the adapter 1116.

The Stand Plan Service Adapter ("the adapter") 1116 may consume the Stand Planning Service Flight rules message and iteratively, per flight, may generate an updateFlight() request which includes the soft rules.

However, it will be appreciated that, in some cases, such an adapter 1011 may not be required. For example, if the existing airport management system is configured for direct communication with the broker 1106, the model 1108, and/or the Stand Optimization Service 1104, such an adapter 1116 may not be required.

The adapter 1116 may sends 1011 an updateFlight() request per flight.

The adapter 1116 may obtain 1012 an optimized stand plan from the Stand Planning Service 1126.

The adapter 1116 and/or Stand Planning Service 1126 may publish an optimized plan available event to the broker 1106.

The Stand Optimization Service 1104 may consume 1014 the event. A score plan message may also be sent 1005 to the broker 1106.

The model 1108 may consume 1016 the Score plan message. The score plan may contains URL's to both the baseline and alternative plans. The score plan may score both the baseline and alternative plans.

The model may send 1017 a message to the Stand Optimization Service 1104 (e.g. via the broker 1106) that the plans have been scored.

On receiving 1018 the plan scored message, the Stand Optimization Service 1104 may update the stand plan optimization record with status indicating that the stand plan scores have been received.

At this point, the interface 1102 (e.g. Airport Director SPA) may have read the updated status and may retrieve the stand plan summary. The stand plan summary may be displayed for the user's attention.

Furthermore, the event may be sent by the Stand Optimization Service 1104 for consumption by a notification service 1112 for generating and sending a notification to a digital twin 1100.

The Stand Planning Service 1126 may be or include an external stand allocation system associated with the airport and/or a rule-based stand allocation system associated with the airport. For example, Stand Planning Service 1126 may be or include an external rule-based stand allocation system having existing rules relating to stand allocation and other functions of the airport.

As described below in relation to Figure 3, the stand optimization model 1108 may include a plurality of AI models (e.g. machine learning models). Thus, it will be appreciated that the system and the method according to a number of embodiments may be used in conjunction with one or more existing rule-based stand allocation system in order to provide one or more improved stand allocation plans. Therefore, it will also be appreciated that the system and the method according to a number of embodiments may result in synergetic advantages due to the combination of the AI models and the existing rule-based stand allocation system. For example, the use of AI models in conjunction with the existing rule-based system may ensure that improved stand allocation plans are provided according to the priorities whilst ensuring that the improved stand allocation plans do not conflict with the existing rules. Furthermore, such a combination of AI models and rule-based system may prevent or reduce the likelihood of typical drawbacks associated with AI model recommendations, such as AI bias amplification. In other words, if the AI models propose flawed optimization plans, the rule-based system may function a safeguard, ensuring that such flawed plans are not executed, thereby averting potential negative consequences.

Figure 3 illustrates an exemplary stand optimization model 1108 according to an embodiment, in which the stand optimization model 1108 is implemented in a form of a prediction module 300. The data sources 310 for the system may include historical records or live streams of any data type that can have direct or indirect relevance and impact on operations and processes of the transport infrastructure (e.g. the airport in the example of Figure 1). Providing more data sources 310 may advantageously enable the prediction module 300 to predict the impact of a certain decision on the provided data type (e.g. flight landing and taking-off data, retail revenue, CO₂ consumption of each airplane type, connection flights, and missed flights and/or connections). Thus, as shown in Figure 3, one or more of the data sources 310 may be used to train one or more machine learning models 312 for prediction 314 of the consequences of one decision over another (i.e., allocating stand A1 to flight 101 vs. allocating stand A2 to flight 101). Therefore, the prediction module 300 may advantageously formulate to one or more decisions that satisfy selected criteria while ensuring that each decision has the minimum negative impact on all other operations and processes in the environment. In other words, depending on the selected value for the priority of each metric, the prediction module 300 may determine globally optimized values (optimizing all model predictions) that satisfy the selected priorities. For example, at the level of single flights, where every decision can impact passenger experience, passenger spending, satisfaction factors such as missed connections or familiar paths from one gate to another, and the quality of services provided, the prediction module 300 may take into account all of the relevant historical data and calculate the impact of a single decision on all the important criteria that the user (e.g. one or more operators and managers) is interested in.

The prediction module 300, as shown in Figure 3, may utilize various machine learning models 312 to predict 314 the output of a decision (e.g. selecting the landing runway, the stand, or boarding gate) on all provided data types. For example, a first model 312-A may be used to predict, based on historical data, how assigning a flight impacted retail sales considering factors such as aircraft type, airline, arrival country, time of day/year, and number of passengers. Additionally, a second model 312-B may be used to predict the impact of the same stand assignment on fuel consumption, as well as electricity consumption or CO₂ production. In such cases, if the airport desires to maximize retail revenue while minimizing CO₂ emissions and is not concerned about other criteria such as delays, the prediction module 300 may take all the predictions and determine a plan satisfying the selected values for retail and CO₂.

Optionally, the prediction module 300 may also enable existing plans to be adjusted. For instance, in the example of above, the prediction module 300 may be used to adjust the plan if mitigation of delays becomes more crucial at later stages. It will also be appreciated that the optimal plan generated from the prediction module 300 may be used to enhance existing, manually implemented rules.

In some embodiments, the prediction module 300 may be configured to generate the best plan that for maximizing positive impacts while minimizing negative impacts in a fully automatic manner. However, such automatically generated optimal plans may not align with the airport's preferences and/or existing rules. In view of this, the prediction module 300 may be provided with or be configured to receive input via a optimization prioritizing panel 302 as shown in Figure 3. The optimization prioritizing panel provides an interface via which the user (e.g. one or more airport managers and/or operators) can select their preferences.

The optimal plan may optionally be sent to other existing systems (e.g. via APIs) to ensure that sure the proposed optimal plan is not conflicting with one or more rules of the existing systems. Optionally, deployment of the proposed optimal plan may be delayed until the it is determined that the proposed optimal plan is not in conflict with the rules of the existing systems. Optionally, the proposed optimal plan may be deployed despite conflicts with the existing system if there is authorization (e.g., received from the user; or retrieved from a database, such as a policy database) to override the conflicting rules.

As mentioned above, the system and/or method described above may be used not only for stand plan optimization, but also for optimizing one or more of other aspects of infrastructure, such as transport infrastructure (e.g. airports, seaports, train stations, other transportation or logistics hubs or travel termini).

Examples 1-14 below provide some examples of the aspects that may be optimized using the system and/or method:

### Example 1. Secure Lane Opening and Resourcing:

The system may analyze historical patterns, emphasizing security efficiency and passenger flow to recommend the optimal allocation of security lanes.

### Example 2. Immigration Opening and Resourcing:

The system may evaluate historical data, focusing on immigration processing times and/or passenger volume to suggest the most efficient opening and resourcing strategy for immigration checkpoints.

### Example 3. Call to Gate Time:

Taking into account historical call-to-gate times, passenger routing preferences, and/or operational constraints, the system may recommend precise plans to minimize waiting times during boarding.

### Example 4. Call to Baggage Time:

Considering historical data on baggage handling, passenger routing, and/or operational efficiency, the system may optimize the call-to-baggage time, ensuring timely delivery.

### Example 5. Passenger Routing:

The system may analyze passenger preferences, historical routing patterns, and/or real-time operational constraints to suggest precise plans that minimize missed connections and improve overall satisfaction.

### Example 6. Baggage Carousels Allocation:

The system may evaluate historical baggage data, flight schedules, and/or passenger flow to recommend the most efficient allocation of baggage carousels, reducing congestion.

### Example 7. Transit Resourcing:

Considering historical transit data, passenger flow patterns, and/or operational requirements, the system may recommend precise resource allocation for transit areas, ensuring efficient passenger movement.

### Example 8. PRM Resourcing:

The system may analyze historical data on passengers with reduced mobility (PRM), recommending the optimal allocation of resources to provide necessary assistance.

### Example 9. Resourcing Check-in Desk/Hosts:

The system may consider historical check-in data, passenger volumes, and/or operational efficiency to recommend the optimal allocation of resources for check-in desks and hosts.

### Example 10. Energy Management:

The system may evaluate historical energy consumption patterns, operational schedules, and environmental considerations to optimize energy management.

### Example 11. Cleaning Schedules:

By analyzing historical restroom usage patterns and operational schedules, the system may recommend efficient floor, washrooms, and equipment cleaning schedules.

### Example 12. Lounge Resourcing:

Considering historical lounge usage, passenger demographics, and service levels, the system may optimize resource allocation for airport lounges.

### Example 13. Play Area Resourcing:

The system may analyze historical data on play area usage, passenger demographics, and operational constraints to recommend optimal resource allocation.

### Example 14. Retail Inventory Management:

By assessing historical retail sales data, passenger preferences, and inventory levels, the system may optimize retail inventory management.

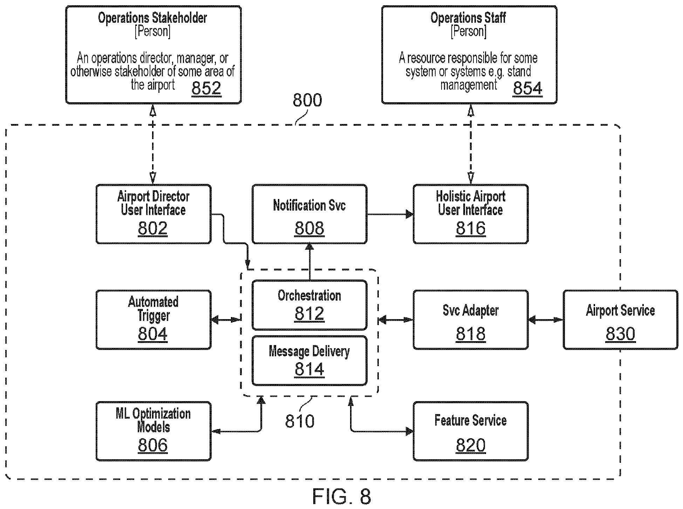

The embodiment described above in relation to Figure 1 exemplifies how the system and/or method according to the invention may be used to optimize stand planning at an airport. However, considering various other use case scenarios, such as Examples 1-14 above, an example of broader perspective of the invention is described in relation to Figure 8.

Figure 8 shows Figure 8a schematic diagram of an exemplary system according to an embodiment. In this example, a user (e.g. an airport stakeholder, an operations director, manager, or other stakeholder of one or more areas of the airport) 852, and/or automated trigger 804, may initiate an orchestrated workflow 812. When an orchestrated workflow 812 is initiated by a user, the initiation may be performed via a user interface 802 as described above. The orchestrated workflow 812 may be initiated for optimization of one or more of aspects of infrastructure.

Machine learning models 806 may be deployed for each of the one or more of aspects of infrastructure, a feature service 820, and/or services 830. Optionally, one or more of the functions shown in Figure 8 may be in integrated. For example, in the previous example shown in Figure 1, the Stand Optimization Service 1104 may act as both the orchestrator 812 and the feature service. However, it will be appreciated that the example of Figure 1 may be modified so that these two functions (orchestration 812 and feature service(s)820) are separately implemented (e.g. physically separated).

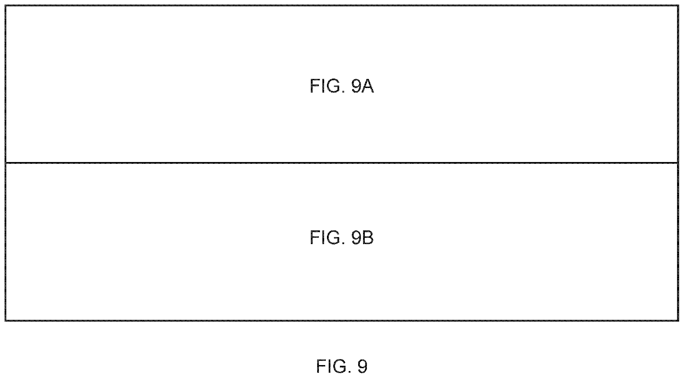

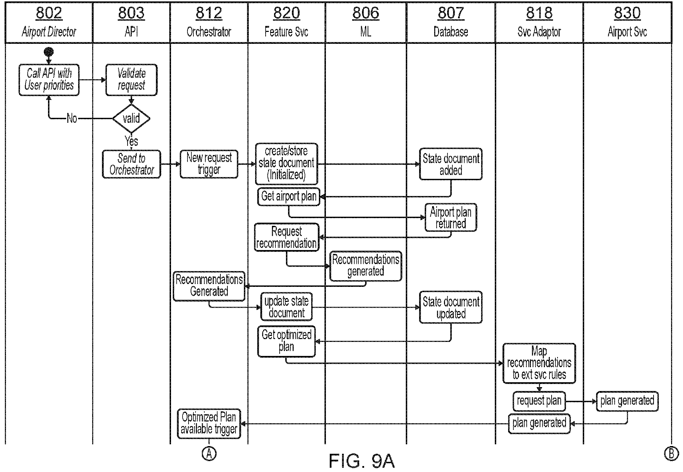

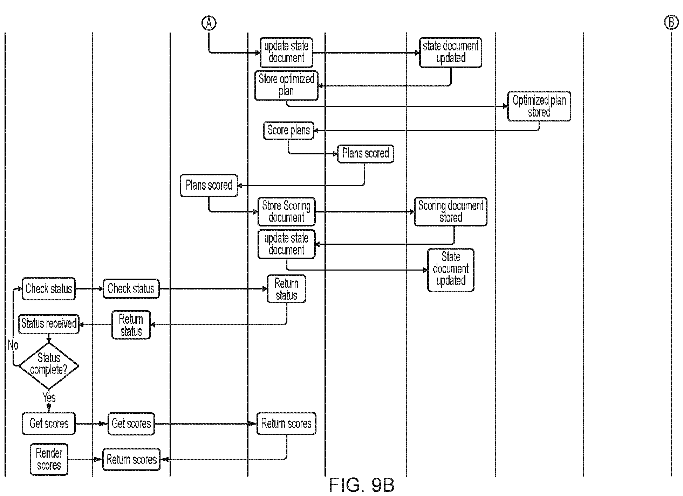

Figure 9, with partial process diagrams Figure 9A and Figure 9B, illustrates a process diagram of an example optimization process. The relative positions of the partial process diagrams is provided by Figure 9. For the purpose of the discussion below, the process diagram illustrated by the combination of the partial process diagrams of Figure 9A and Figure 9B is referred to as Figure 9.

Figure 9 depicts a simplified example end-to-end process at a high level, without taking into account the automated trigger mechanism 804 or the asynchronous notification to a digital twin 1100 (e.g. the airport's digital twin).

In the example of Figure 9, a user (e.g. an operations stakeholder or stakeholders) 852 may set priorities across the one or more aspects of the infrastructure. It will be appreciated that, in some cases, a single key stakeholder may be responsible for prioritizing the entire array of key performance indicators, while in other cases, multiple staff may be responsible for differing aspects of the campus. The Airport Director User Interface 802 may be configured to enable the user to initiate a plan request.

Where the automated trigger 804 is used (not shown in Figure 9) to initiate an orchestrated workflow 812, the automated triggers 804 may, for example, be configured to perform time-initiated processing. Examples of automated triggers 804 are provided below:
- Optimization processing should be run at midnight each day to generate plans to be executed that day.
- Optimization processing should be run at 6:pm the day prior to day of operations to give ample time for administrators to study the new plans and adjust their production systems.
- Optimization processing runs every 10 minutes to process newly ingested data to adjust for changes in real time conditions.

Thus, the API 803 or automated trigger request(s) 804 may initiate the orchestration process 812. The orchestration 812 may control the process flow and ongoing status. This may, for example, be supported by one or more delivery protocols (e.g. callback (webhook), synchronous API request/response, fire and forget/store and forward).

The orchestration 812 may trigger:
- retrieval of the airports current plan;
- generation of recommendations by the machine learning models;
- optimization of the current plan by the infrastructure (e.g. the airport) system by using the recommendations mapped to specific configuration or rules employed by that system; and
- scoring of the airports plan and the optimized plan.

The Airport Director 802 may, in turn, monitor the process status and, when the process completes, may fetch the scores and display them for the user's attention (e.g. by rendering the scores on a user-accessible screen).

It will be appreciated that the adapter 1116 and/or the broker 1106 described in relation to the example of stand optimization (as shown in Figure 1) may be used for optimizing aspects other than stand allocation.

Thus, the system and method according to a number of embodiments synergize machine learning for predictive analysis with optimization models to recommend and implement operation plans aligned with specific criteria rates, providing a comprehensive and intelligent solution for optimizing travel and transportations operations.

Furthermore, the system and method according to a number of embodiments may enable control of one or more parts of the infrastructure in order to execute the optimized plan generated by the system. For example, the system may comprise or be couple to a transmitter for transmitting directions for one or more of: controlling an aircraft to a stand according to the second plan; controlling allocation of security lanes according to the second plan; controlling opening and/or allocation of resources at one or more areas of the infrastructure (e.g. allocating staff and/or facilities for immigration, transit, baggage carousel, PRM assistance, check-in, play area, and/or lounge area) according to the second plan; controlling times (e.g. call-to gate times and/or call-to-baggage times) for one or more information announcements according to the second plan; controlling routing for one or more user of the infrastructure according to the second plan; controlling energy usage in one or more areas of the infrastructure according to the second plan; controlling schedules and/or allocation of resources for maintenance and/or cleaning schedules according to the second plan; and/or managing retail inventory.

Such directions may, for example, be sent to one or more corresponding devices and/or vehicles for automatic control according to the optimized plan. Such directions may, for example, be sent to one or more display, projection, or audio devices for attention of and/or action by one or more users of the infrastructure (e.g. airline staff (e.g. pilots, cabin and/or ground crews), airport staff, and/or passengers).

As every decision may result in a high number of consequences, finding a globally optimal plan may, in some cases, not be easily achievable. In view of this, a system and a method for evaluating the dynamic relationships between diverse factors are desired in order to allow for a more informed and strategic optimization of the entire system.

In view of this, the systems and methods according to some embodiments may utilize a graph-based optimization as described below.

### Proposed Optimization Algorithms:

Interconnecting various sources of data: in this step the system correlates any relevant information to the initial data using any correlation that might exist in the tabular data. These various sources of data might include timestamp, physical location ID, departure and arrival location, gate numbers, vehicle and equipment tags, or aircraft ID, terminal codes, connection details, the system uses these IDs to create a large matrix including all of the relevant information.

Filtering out less important data: depending on the target criteria that is going to be optimized the system selects from a list of defined or learnable thresholds for each data type. With the selection of the optimization target value, the system removes least relevant data and keeps the most significant correlated data that by solving them it produces the most gain for the target value. For example, if the target is to optimize the passenger with risky connections, the system filters any irrelevant data to the criterion such as passengers with no connections and passengers with connections that have enough time between their flights that are larger than a certain threshold.

### Graph Processor:

Extracting fixable nodes based on minimum/maximum thresholds is the step that the system extracts rows of the data that are technically fixable, for example those connections that have a minimum time between arrival and departure for at least X minutes. The minimum minutes depends on the walk time from point A to point, and the size and walk time in travel or transportation hub the solution applies to (airports, train stations, bus terminals, seaports, spaceports, or intermodal terminals) this threshold can be automatically calculated based on average walk time between each two points using computer vision and person tracking.

The system assigns a distinctive ID to each data point, and this tagged ID serves to highlight correlated data points. Subsequently, this unique tag facilitates the filtration of data with minimal or no correlation. Beyond the current optimization criterion this approach introduces additional edges in a graph, signifying interconnected data that may be affected by modifying a specific data point. In the final step, connections that are impossible to break are filtered out. For instance, in the context of a risky connection problem, passengers with enough buffer time for the connection that exceeds the maximum walking distance between arrival and departure gates are excluded.

In the next step the graph processor creates a graph structure by assign a node to each unique ID. The edges on the graph are the meaningful correlation values between nodes (e.g., the walk time between node-A to node-B). In some graphs the edge may contain more aggregated information about the data such as the total number of passengers between flight:100 and flight:200, the min/max time for connecting passengers, or other information to provide better services based on age, gender, limitations or disabilities, etc. In real-world applications there are constraints in place that restrict the options within the system to choose any arbitrary plan that might maximize the performance. For instance, certain jet bridges may have limitations based on aircraft size, or specific gates may be designated for particular flights. Consequently, the system establishes fixed nodes, either through direct implementation of rules or by utilizing software with embedded rules, which cannot be relocated. If a fixed flight is associated with seven connections (edges), the system creates seven new nodes with unique identifiers by appending "_index" to the link_id. Connections are then established between these new indexed nodes and their neighbouring nodes from the original graph, after which the initial fixed node is removed. Subsequently, nodes with a degree (number of connected edges) greater than or equal to the SPLIT_MIN_DEGREE parameter are selected. The next step involves iterating through all possible node degrees between the maximum degree and SPLIT_MIN_DEGREE in descending order. Assuming the maximum degree is 10, this process allows for the graph to be split by nodes with a degree of 10, followed by nodes with a degree of 9, and so forth. The splitting process mirrors generates a corresponding number of artificial nodes equivalent to its degree. For instance, a node with a degree of 10 results in the creation of 10 subgraphs associated with that particular flight. Finally, the initial node is removed from the graph.

Following the described process, we proceed to exclude from the graph any weakly connected components comprising solely fixed nodes. This exclusion is necessary because optimizing the layout becomes impractical when all flights within a graph are fixed and cannot be relocated to alternate stands. Subsequently, the system implement a function to assign weights to the graph, a step vital for visualization. This function enhances visualization by increasing the thickness of the lines on the graph in proportion to the relevant data such as the number of connected passengers. In the final step, we divide the graph, initially composed of multiple connected components, into a series of smaller graphs. Each of these smaller graphs serves as input data for the optimization algorithm.

### Optimizer:

This step operates on the output from the Graph Processor, which consists of a list of small, independent graphs. The process entails iterating through each graph individually. Within each graph, the objective is to resolve all potentially optimize the graph so there are no edges with criteria less than the desired and avoid or minimize any negative impact on other edges in the graph. For example, in the context of risky connections, the edges define time between two flights, and the goal is to make all risky connections to be non-risky while preserving non-risky connections that may become risky due to stand changes. The optimization process starts with enhancing the graph by adding a new column indicating the longest permissible value for the edges (e.g., maximum time between gates for each connection), ensuring flight safety. Then, it removes any connections with insufficient values such as the time for repair across all possible stand configurations, indicating negative walking times. After that, it assigns initial infrastructure values, for example gates, for all fixed flights to keep them from moving. For each connection in the graph, the system calculates all possible configuration pairs that make the value below the threshold, starting with the closest pairs and moving to more distant ones.

There are two optimization methods, the first one focuses on a single graph at a time. It starts by identifying connections that can be improved (i.e., not fixed, carrying passengers, and with sufficient time for gate-to-gate transit). Then, it assigns initial infrastructure value (e.g., gates) for all connections and generates combinations of connections to optimize, starting with all connections and gradually excluding one if needed. For example, let's say we have three connections named A, B, and C. The system initially tries to optimize all three connections together (A, B, C). If that's not successful, it tries combinations like (A, B), (A, C), (B, C), and finally (A), (B), and (C). If no solution is found, it concludes that optimization for that group of nodes (e.g., flights) is not possible. Therefore, this process only applies to connections that are possible to be optimized pairwise.

The second optimization method is based on a recursive Depth-First Search (DFS) algorithm. It starts with the first connection and considers all possible gate pairs with a distance of one. For subsequent connections, it filters out gate pairs used in previous steps to avoid conflicts. The objective is to minimize overall edge values between nodes (e.g., walking time between gates) for all passengers.

Example: If the first connection takes gate pair A1-A2, for instance, the second connection cannot use these two gates unless their arrival or departure aligns with those of the first connection. Therefore, the system passes the chosen_gates structure to the next optimization step, including the newly selected gate pair for both flights of a given connection. Subsequently, it filters out any gate pairs that were used in previous optimization steps. This ensures that the same gate isn't assigned to two different flights, and that stands already taken by fixed flights remain unchanged. Fixed flights should maintain their designated stands without alteration. Additionally, the algorithm ignores solutions that are worse than the one with the shortest walking distance found so far, speeding up computation by avoiding unnecessary searches. If the total walking distance for currently selected gates exceeds that of the best solution found, further exploration is halted.

### Code explanation:

prepare_nodes: Prepares nodes for the graph based on unique incoming and connecting flights.
create_graph: Creates a directed graph from the input DataFrame.
visualize_graph: Visualizes the graph using the Pyvis library.
get_nodes_by_degree: Retrieves nodes with a degree equal to or higher than the specified degree.
split_components_by_degree: Splits components in the graph based on the degree of nodes.
sort_helper: A helper method for sorting DataFrames based on flight details.
_format_node_id: Formats node_id when link_id is used.
split_grouped_connections: Splits and groups connections based on the processed graph. get_fixed_nodes: Retrieves fixed nodes from the graph.
fix_nodes: Fixes nodes in the graph based on given attributes.
remove_fixed_components: Removes components from the graph where all nodes are fixed.
remove_unfixable_components: Removes components from the graph where all edges have negative minimum time between flights.

### Augmenting the system with Generative AI and Large Language Models (LLMs):

The system may utilize Large Language Models (LLMs), which are based on Generative AI. These models help analyze complex data and make decisions based on that data. Instead of just handling routine maintenance tasks, this system aims to make resource allocation more efficient, which means using resources like time, staff, and equipment in the best possible way to improve how things operate.

By using LLMs, the system can analyze different kinds of data, like maintenance records, weather information, and flight patterns. This helps predict potential issues with planes and airport facilities before they happen. For example, it can help schedule maintenance ahead of time to avoid unexpected problems and make sure everything runs smoothly, as well as managing things like assigning gates, check-in counters, and baggage handling areas at airports. The idea is to reduce wasted time for planes sitting idle, ease congestion at gates, and make airports run more smoothly overall. For managing flight crews, the system uses smart algorithms that consider things like how tired the crew is, their skills, and rules they need to follow. This helps make sure crews are assigned to flights in the most efficient way possible, while still meeting all the necessary regulations.

To help protect the environment, the system learns from other domains using LLMs to make flight routes more fuel-efficient, which also reduces carbon emissions. This contributes to larger efforts to make air travel more sustainable. By using LLMs the system can have better plans for reducing delays and other disruptions to flights, making travelers happier. It also works on optimizing things like gate assignments and passenger flow through airports to make the whole travel experience smoother. The system also includes a decision support system that uses data to help people make better decisions. This can involve spotting trends, finding areas for improvement, and predicting future challenges. Overall, the system aims to shift from reacting to problems using single AI models to being more proactive in preventing them using LLMs holistic knowledge and helping protect the environment, improves operational plans and processes, enhance passenger experience, and gives decision-makers better information to work with.

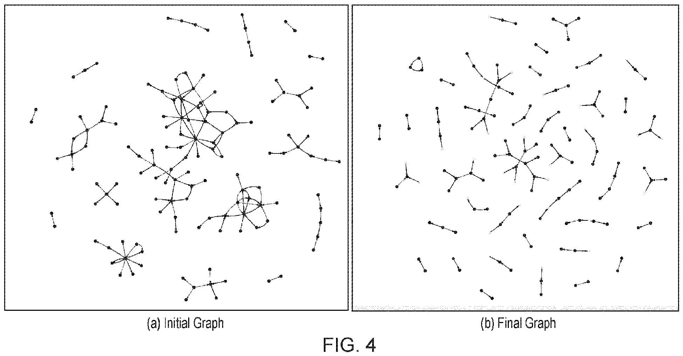

An example of the graph-based algorithm that can be applied to various types of data is described in relation to Figure 4 to Figure 7. Graphs with a large number of nodes, given their sizes, may not be able to represent all of the important nodes in a clear manner. As a result, one or more important may be disregarded. Furthermore, solving such large graphs may be computationally difficult, time-consuming impossible, and/or may be practically impossible (e.g. may take few thousand years to solve). The graph-based algorithm according to some embodiments of the invention may provide a solution to this problem by providing a way to simplify graphs.

Figure 4(a) shows an exemplary initial graph constructed from Passenger Transfer Messages (PTMs) for a given day. In this examples, nodes are aircrafts and edges indicate that there are connecting passengers between those aircrafts.

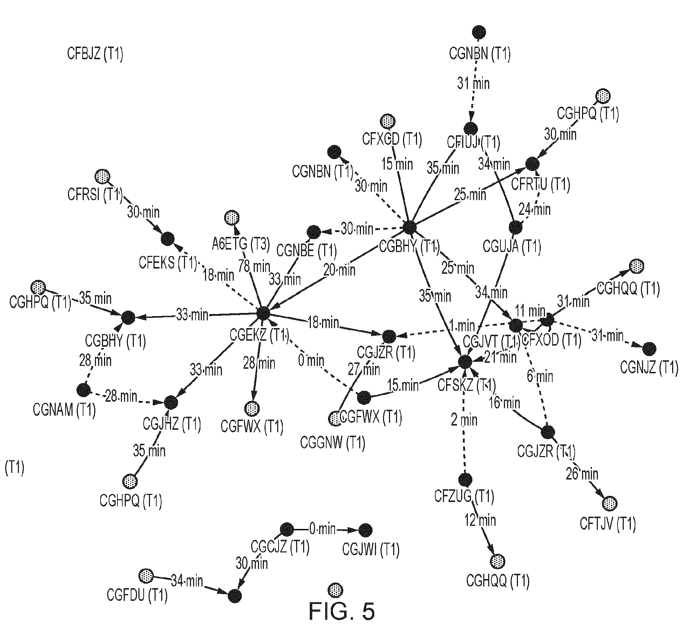

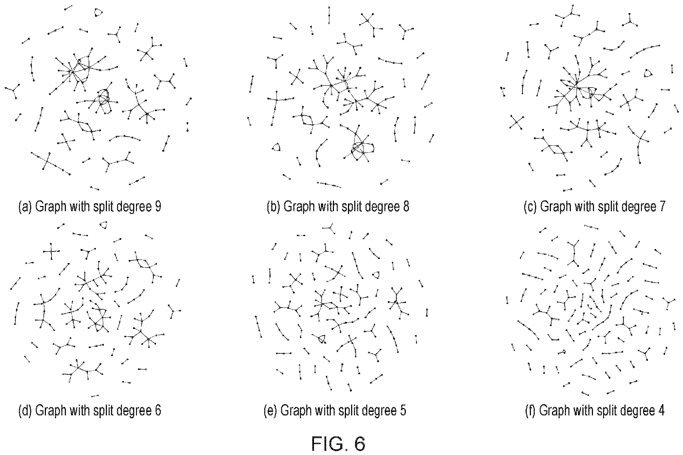

In this example, the algorithm prioritizes tackling flights with numerous connections first, as they pose the greatest challenge, as illustrated in Figure 5. To simplify, in this example, the algorithm keeps aircraft that cannot be moved in their current positions, essentially fixing them in their positions. This allows the algorithm to break down the large network of flights into smaller, more manageable sections centred around these fixed points. Then, nodes are processed in a descending order of split degree as shown in Figure 6 (i.e. from the highest split degree up to those with lower degrees (e.g. from split degree 9 to split degree 4 in the example of Figure 6). These steps constitute the intermediate stages of the process.

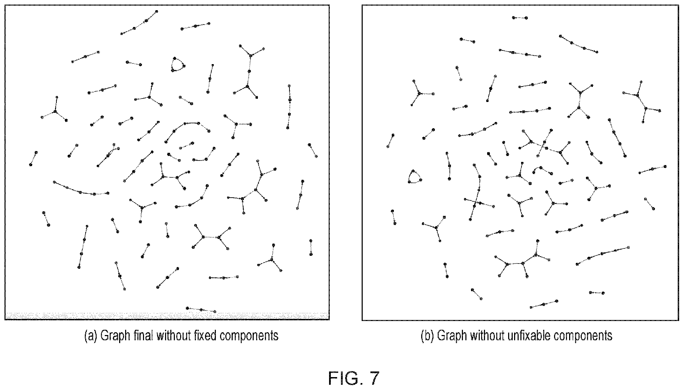

Figure 7 illustrates examples of (a) a graph final without fixed components, and (b) graph without unfixable components. The former refers to a graph where fixed elements have been accounted for but the final configuration is uncertain, while the latter denotes a graph where connections deemed impossible have been removed to mitigate risk. Figure 4(b) shows an example of a final graph.

Thus, it will be appreciated that the system and method according to a number of embodiments may utilize pre-trained machine learning models as a foundation for various aspects within the system, such as predicting the impact of decisions on criteria such as revenue, fuel consumption, and environmental impact. The system may fine-tune the models with new data on a time-schedule basis (e.g. daily, weekly, monthly), and/or any time the difference between the predicted values and actual ones exceeds a certain threshold in order to ensure adaptability and accuracy in reflecting the evolving nature of travel and transportation operations.

It will also be appreciated that the system and method according to a number of embodiments may implement a graph-based solution within and/or in conjunction with the system to identify and quantify correlations between different criteria. By constructing a graph that represents relationships and dependencies among various factors, the system may intelligently determine the most impactful correlations. This approach may enhance decision-making by providing a visual representation of the complex interconnections within the dataset.

It will also be appreciated that the system according to a number of embodiments may be designed with a modular architecture that separates the prediction and optimization phases. Such designs may enable the system to utilize machine learning models for predicting the outcomes and impacts of different plans on specified criteria, as well as providing optimization processing modules that select the most suitable plan based on predetermined criteria rates. Such separation may enable faster and more robust planning, enhancing the system's overall efficiency.

It will also be appreciated that the system and method according to a number of embodiments may be used for optimizing various aspects of the infrastructure independently or in correlation with each other. Therefore, the system may allow the user(s) to prioritize specific criteria or consider multiple criteria simultaneously based on the operational requirements. Such adaptability allows the system to address diverse scenarios, providing tailored solutions to different challenges within the travel and transportation customers.

It will also be appreciated that the system and method according to a number of embodiments may use a continuous learning mechanism by capturing predicted versus actual values over time. For example, when the disparity between predicted and actual outcomes exceeds a predefined threshold, the system may trigger an update to its machine learning models. This may ensure that the models evolve and adapt to changing conditions, improving their accuracy and responsiveness over time. Such continuous learning may also enhance the system's ability to make more informed predictions as it encounters new data and scenarios.

Therefore, the system and method according to a number of embodiments may provide a dynamic and adaptive solution that leverages advanced machine learning techniques as well as one or more of graph-based analysis, modular design, and continuous learning to optimize various aspects of travel and transportation operations. The synergy of these components contributes to a sophisticated and intelligent framework for addressing the limitations of conventional decision-making processes in various infrastructure, such as transport infrastructure.

Communication between two or more components of the system described above may be performed via one or more wired or/and wireless communication networks. One or more storage devices and/or systems that are part of or connected to the item handling system may be remote storage devices or systems, such as cloud-based storage devices or systems.

The wired or wireless communication networks described above may be public, private, wired or wireless network. The communications network may include one or more of a local area network (LAN), a wide area network (WAN), the Internet, a mobile telephony communication system, or a satellite communication system. The communications network may comprise any suitable infrastructure, including copper cables, optical cables or fibers, routers, firewalls, switches, gateway computers and edge servers.

The system described above may comprise a Graphical User Interface. Embodiments of the invention may include an on-screen graphical user interface. The user interface may be provided, for example, in the form of a widget embedded in a web site, as an application for a device, or on a dedicated landing web page. Computer readable program instructions for implementing the graphical user interface may be downloaded to the client device from a computer readable storage medium via a network, for example, the Internet, a local area network (LAN), a wide area network (WAN) and/or a wireless network. The instructions may be stored in a computer readable storage medium within the client device.

As will be appreciated by one of skill in the art, the invention described herein may be embodied in whole or in part as a method, a data processing system, or a computer program product including computer readable instructions. Accordingly, the invention may take the form of an entirely hardware embodiment or an embodiment combining software, hardware and any other suitable approach or apparatus.

The computer readable program instructions may be stored on a non-transitory, tangible computer readable medium. The computer readable storage medium may include one or more of an electronic storage device, a magnetic storage device, an optical storage device, an electromagnetic storage device, a semiconductor storage device, a portable computer disk, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk.

Exemplary embodiments of the invention may be implemented as a circuit board which may include a CPU, a bus, RAM, flash memory, one or more ports for operation of connected I/O apparatus such as printers, display, keypads, sensors and cameras, ROM, a communications sub-system such as a modem, and communications media.

## Claims

1. A method for optimizing stand planning comprising steps of:
a. receiving one or more priority parameters for consideration in the stand planning,
wherein each of the priority parameters comprises a weighting, and is associated with one or more airport functions;
b. receiving an existing, first stand plan from an existing, first stand planning optimization system (1126),
wherein the first stand plan comprises data relating to flights and their allocated stands;
c. generating a recommended, second stand plan by a second stand planning optimization system (1104),
wherein the second stand plan is generated by modifying the first stand plan in order to allocate stands to the flights according to the priority parameters, using a prediction module (300) comprising one or more models (312);
d. transmitting the second stand plan from the second stand planning optimization system (1104) to the first stand planning optimization system (1126); and
e. updating the first stand plan based on the second stand plan.

2. The method of claim 1,
wherein one or more existing rules relating to the one or more airport functions are retrieved prior to the step of generating the second stand plan, and wherein the second stand plan is generated to avoid conflicts with the existing rules; and/or
wherein the one or more existing rules relating to the one or more airport functions are retrieved from an external database associated with the airport; and/or
wherein the one or more priority parameters are retrieved from a rule-based database associated with the airport; and/or
wherein the one or more priority parameters are retrieved via a user input or from a database.

3. A method for prioritizing the one or more priority parameters in the method of any of claims 1 to 5,
wherein the weighting of the each of the priority parameters is dynamically adjustable by the user;
preferably wherein during the adjustment the of the weighting, changes of the one or more airport functions of the corresponding parameter are displayed to the user, and/or wherein the changes of the one or more airport functions of the corresponding parameter are displayed in forms of sub-parameters having numerical values.

4. A method of any of the preceding claims, further comprising a step of:
f. transmitting directions for controlling an aircraft to a stand according to the second plan.

5. A system for optimizing stand planning comprising:
a. a receiver for
receiving one or more priority parameters for consideration in the stand planning,
wherein each of the priority parameters comprises a weighting, and is associated with one or more airport functions, and
receiving an existing, first stand plan from an existing, first stand planning optimization system (1126),
wherein the first stand plan comprises data relating to flights and their allocated stands;
b. a processor for generating a recommended, second stand plan by a second stand planning optimization system (1104),
wherein the second stand plan is generated by modifying the first stand plan in order to allocate stands to the flights according to the priority parameters, using a prediction module (300) comprising one or more models (312); and
c. a transmitter for transmitting the second stand plan from the second stand planning optimization system (1104) to the first stand planning optimization system (1126) for updating the first stand plan based on the second stand plan.

6. A prediction module (300) for use in the method of any of claims 1 to 4 or in the system of claim 5,
wherein the prediction module comprises a plurality of machine learning models (312),
each of the machine learning models is connected to one or more data sources (310), and is trained to perform prediction (314) of one or more consequences of a one or more decisions based on historical data from the one or more data sources, and
the one or more consequences predicted by the machine learning models relate to a plurality of airport functions;
preferably wherein the second stand plan is selected from one or more candidate second stand plans that satisfy the priority parameters, based on the one or more decisions and the consequences according to the prediction by the machine leaning models, and/or wherein the second stand plan is associated with the fewest negative consequences according to the predictions by the machine learning models.

7. A computer program product which, when executed, undertakes the method of any of claims 1 to 4.

8. A method for optimizing infrastructure comprising steps of:
a. receiving one or more priority parameters for consideration for optimization, wherein each of the priority parameters relates to a target aspect of the infrastructure associated with one or more functions of the infrastructure and comprises a weighting;
b. receiving an existing, first optimization plan from an existing, first optimization system,
wherein the first optimization comprises data relating to the target aspect(s);
c. generating a recommended, second optimization plan by a second optimization system,
wherein the second optimization plan is generated by modifying the first optimization plan in order to optimize the target aspect(s) according to the weighting(s), using a prediction module (300) comprising one or more models (312);
d. transmitting the second optimization plan from the second optimization system to the first optimization system; and
e. updating the first optimization plan based on the second optimization plan.

9. The method of claim 8,
wherein one or more existing rules relating to the one or more functions of the infrastructure are retrieved prior to the step of generating the second optimization plan, and wherein the second optimization plan is generated to avoid conflicts with the existing rules; and/or
wherein the one or more existing rules relating to the one or more function of the infrastructure are retrieved from an external database associated with the infrastructure.

10. The method of any of preceding claims, wherein the one or more priority parameters are retrieved from a rule-based database associated with the infrastructure.

11. The method of any of claims 1 to 4 and 8 to 10, wherein the one or more priority parameters are retrieved via a user input or from a database.

12. A method for prioritizing the one or more priority parameters in the method of any of claims 8 to 11, wherein the weighting of the each of the priority parameters is dynamically adjustable by the user;
preferably wherein during the adjustment the of the weighting, changes of the one or more functions of the infrastructure of the corresponding parameter are displayed to the user, and/or
wherein the changes of the one or more functions of the airport of the corresponding parameter are displayed in forms of sub-parameters having numerical values.

13. A method of any of claims 8 to 11, further comprising a step of:
f. transmitting directions for any one or more of:
controlling an aircraft to a stand according to the second plan;
controlling allocation of security lanes according to the second plan;
controlling opening and/or allocation of resources at one or more areas of the infrastructure according to the second plan;
controlling times for one or more information announcements according to the second plan;
controlling routing for one or more user of the infrastructure according to the second plan;
controlling energy usage in one or more areas of the infrastructure according to the second plan; and/or
controlling schedules and/or allocation of resources for maintenance and/or cleaning schedules according to the second plan.

14. A system for optimizing infrastructure comprising:
a. a receiver for
receiving one or more priority parameters for consideration for optimization,
wherein each of the priority parameters relates to a target aspect of the infrastructure associated with one or more functions of the infrastructure and comprises a weighting
receiving an existing, first optimization plan from an existing, first optimization system,
wherein the first optimization comprises data relating to the target aspect(s);
b. a processor for generating a recommended, second optimization plan by a second optimization system,
wherein the second optimization plan is generated by modifying the first optimization plan in order to optimize the target aspect(s) according to the weighting(s), using a prediction module (300) comprising one or more models (312); and
c. a transmitter for transmitting the second optimization plan from the second optimization system to the first optimization system for updating the first optimization plan based on the second optimization plan.

15. A prediction module (300) for use in the method of any of claims 8 to 13 or in the system of claim 14,
wherein the prediction module comprises a plurality of machine learning models (312),
each of the machine learning models is connected to one or more data sources (310), and is trained to perform prediction (314) of one or more consequences of a one or more decisions based on historical data from the one or more data sources, and
the one or more consequences predicted by the machine learning models relate to a plurality of functions of the infrastructure;
preferably wherein the second optimization plan is selected from one or more candidate second optimization plans that satisfy the priority parameters, based on the one or more decisions and the consequences according to the prediction by the machine leaning models, and/or
wherein the second optimization plan is associated with the fewest negative consequences according to the predictions by the machine learning models.

16. A computer program product which, when executed, undertakes the method of any of claims 8 t 13.

## Patentansprüche

1. Verfahren zur Optimierung der Stellplatzplanung, das die folgenden Schritte umfasst:
a. Empfangen von einem oder mehreren Prioritätsparametern zur Berücksichtigung bei der Stellplatzplanung,
wobei jeder der Prioritätsparameter eine Gewichtung umfasst und mit einer oder mehreren Flughafenfunktionen verknüpft ist;
b. Empfangen eines bestehenden, ersten Stellplatzplans von einem bestehenden, ersten Stellplatzplanungsoptimierungssystem (1126),
wobei der erste Stellplatzplan Daten in Bezug auf Flüge und die ihnen zugewiesenen Stellplätze umfasst;
c. Erzeugen eines empfohlenen, zweiten Stellplatzplans durch ein zweites Stellplatzplanungsoptimierungssystem (1104),
wobei der zweite Stellplatzplan durch Modifizieren des ersten Stellplatzplans, um den Flügen Stellplätze gemäß den Prioritätsparametern zuzuweisen, unter Verwendung eines Vorhersagemoduls (300), das ein oder mehrere Modelle (312) umfasst, erzeugt wird;
d. Übertragen des zweiten Stellplatzplans von dem zweiten Stellplatzplanungsoptimierungssystem (1104) an das erste Stellplatzplanungsoptimierungssystem (1126); und
e. Aktualisieren des ersten Stellplatzplans auf Basis des zweiten Stellplatzplans.

2. Verfahren nach Anspruch 1,
wobei eine oder mehrere bestehende Regeln in Bezug auf die eine oder mehreren Flughafenfunktionen vor dem Schritt des Erzeugens des zweiten Stellplatzplans abgerufen werden und wobei der zweite Stellplatzplan erzeugt wird, um Konflikte mit den bestehenden Regeln zu vermeiden; und/oder
wobei die eine oder mehreren bestehenden Regeln in Bezug auf die eine oder mehreren Flughafenfunktionen aus einer mit dem Flughafen verknüpften externen Datenbank abgerufen werden; und/oder
wobei der eine oder die mehreren Prioritätsparameter über eine Benutzereingabe oder aus einer Datenbank abgerufen werden.

3. Verfahren zur Priorisierung des einen oder der mehreren Prioritätsparameter im Verfahren nach einem der Ansprüche 1 bis 5,
wobei die Gewichtung von jedem der Prioritätsparameter durch den Benutzer dynamisch einstellbar ist;
vorzugsweise wobei während der Einstellung der Gewichtung Änderungen der einen oder mehreren Flughafenfunktionen des entsprechenden Parameters dem Benutzer angezeigt werden und/oder wobei die Änderungen der einen oder mehreren Flughafenfunktionen des entsprechenden Parameters in Formen von Unterparametern mit Zahlenwerten angezeigt werden.

4. Verfahren nach einem der vorhergehenden Ansprüche, das ferner den folgenden Schritt umfasst:
f. Übertragen von Anweisungen zur Steuerung eines Flugzeugs zu einem Stellplatz gemäß dem zweiten Plan.

5. System zur Optimierung der Stellplatzplanung, umfassend:
a. einen Empfänger zum:
Empfangen von einem oder mehreren Prioritätsparametern zur Berücksichtigung bei der Stellplatzplanung,
wobei jeder der Prioritätsparameter eine Gewichtung umfasst und mit einer oder mehreren Flughafenfunktionen verknüpft ist, und
Empfangen eines bestehenden, ersten Stellplatzplans von einem ersten Stellplatzplanungsoptimierungssystem (1126),
wobei der erste Stellplatzplan Daten in Bezug auf Flüge und die ihnen zugewiesenen Stellplätze umfasst;
b. einen Prozessor zum Erzeugen eines empfohlenen, zweiten Stellplatzplans durch ein zweites Stellplatzplanungsoptimierungssystem (1104),
wobei der zweite Stellplatzplan durch Modifizieren des ersten Stellplatzplans, um den Flügen Stellplätze gemäß den Prioritätsparametern zuzuweisen, unter Verwendung eines Vorhersagemoduls (300), das ein oder mehrere Modelle (312) umfasst, erzeugt wird; und
c. einen Sender zum Übertragen des zweiten Stellplatzplans von dem zweiten Stellplatzplanungsoptimierungssystem (1104) an das erste Stellplatzplanungsoptimierungssystem (1126) zur Aktualisierung des ersten Stellplatzplans auf Basis des zweiten Stellplatzplans.

6. Vorhersagemodul (300) zur Verwendung in einem Verfahren nach einem der Ansprüche 1 bis 4 oder im Systemanspruch 5,
wobei das Vorhersagemodul eine Mehrzahl von Modellen des maschinellen Lernens (312) umfasst,
jedes der Modelle des maschinellen Lernens mit einer oder mehreren Datenquellen (310) verbunden ist und zum Durchführen einer Vorhersage (314) von einer oder mehreren Folgen einer oder mehrerer Entscheidungen auf Basis von historischen Daten aus der einen oder den mehreren Datenquellen trainiert ist, und
die von den Modellen des maschinellen Lernens vorhergesagte(n) eine oder mehreren Folgen sich auf eine Mehrzahl von Lufthafenfunktionen beziehen;
vorzugsweise wobei der zweite Stellplatzplan aus einem oder mehreren Kandidaten für zweite Stellplatzpläne, die die Prioritätsparameter erfüllen, auf Basis der einen oder mehreren Entscheidungen und der Folgen gemäß der Vorhersage durch die Modelle des maschinellen Lernens ausgewählt wird und/oder wobei der zweite Stellplatzplan mit den wenigsten negativen Folgen gemäß den Vorhersagen durch die Modelle des maschinellen Lernens verknüpft ist.

7. Computerprogrammprodukt, das bei Ausführung das Verfahren nach einem der Ansprüche 1 bis 4 durchführt.

8. Verfahren zur Infrastrukturoptimierung, das die folgenden Schritte umfasst:
a. Empfangen von einem oder mehreren Prioritätsparametern zur Berücksichtigung für die Optimierung,
wobei jeder der Prioritätsparameter sich auf einen Zielaspekt der Infrastruktur bezieht, der mit einer oder mehreren Funktionen der Infrastruktur verknüpft ist, und eine Gewichtung umfasst;
b. Empfangen eines bestehenden, ersten Optimierungsplans von einem bestehenden, ersten Optimierungssystem,
wobei die erste Optimierung Daten in Bezug auf den bzw. die Zielaspekt(e) umfasst;
c. Erzeugen eines empfohlenen, zweiten Optimierungsplans durch ein zweites Optimierungssystem,
wobei der zweite Optimierungsplan durch Modifizieren des ersten Optimierungsplans, um den bzw. die Zielaspekt(e) gemäß der bzw. den Gewichtung(en) zu optimieren, unter Verwendung eines Vorhersagemoduls (300), das ein oder mehrere Modelle (312) umfasst, erzeugt wird;
d. Übertragen des zweiten Optimierungsplans von dem zweiten Optimierungssystem an das erste Optimierungssystem; und
e. Aktualisieren des ersten Optimierungsplans auf Basis des zweiten Optimierungsplans.

9. Verfahren nach Anspruch 8,
wobei eine oder mehrere bestehende Regeln in Bezug auf die eine oder mehreren Funktionen der Infrastruktur vor dem Schritt des Erzeugens des zweiten Optimierungsplans abgerufen werden und wobei der zweite Optimierungsplan erzeugt wird, um Konflikte mit den bestehenden Regeln zu vermeiden; und/oder
wobei die eine oder mehreren bestehenden Regeln in Bezug auf die eine oder mehreren Funktionen der Infrastruktur aus einer mit der Infrastruktur verknüpften externen Datenbank abgerufen werden.

10. Verfahren nach einem der vorhergehenden Ansprüche, wobei der eine oder die mehreren Prioritätsparameter aus einer mit der Infrastruktur verknüpften regelbasierten Datenbank abgerufen werden.

11. Verfahren nach einem der Ansprüche 1 bis 4 und 8 bis 10, wobei der eine oder die mehreren Prioritätsparameter über eine Benutzereingabe oder aus einer Datenbank abgerufen werden.

12. Verfahren zur Priorisierung des einen oder der mehreren Prioritätsparameter im Verfahren nach einem der Ansprüche 8 bis 11, wobei die Gewichtung von jedem der Prioritätsparameter durch den Benutzer dynamisch einstellbar ist;
vorzugsweise wobei während der Einstellung der Gewichtung Änderungen der einen oder mehreren Funktionen der Infrastruktur des entsprechenden Parameters dem Benutzer angezeigt werden und/oder
wobei die Änderungen der einen oder mehreren Funktionen des Flughafens des entsprechenden Parameters in Formen von Unterparametern mit Zahlenwerten angezeigt werden.

13. Verfahren nach einem der Ansprüche 8 bis 11, das ferner den folgenden Schritt umfasst:
f. Übertragen von Anweisungen für eines oder mehrere der folgenden:
Steuern eines Flugzeugs zu einem Stellplatz gemäß dem zweiten Plan;
Steuern der Zuweisung von Sicherheitskontrollen gemäß dem zweiten Plan;
Steuern des Öffnens und/oder der Zuweisung von Ressourcen an einem oder mehreren Bereichen der Infrastruktur gemäß dem zweiten Plan;
Steuern von Zeiten für eine oder mehrere Informationsbekanntgaben gemäß dem zweiten Plan;
Steuern der Lenkung für einen oder mehrere Benutzer der Infrastruktur gemäß dem zweiten Plan;
Steuern des Energieverbrauchs in einem oder mehreren Bereichen der Infrastruktur gemäß dem zweiten Plan; und/oder
Steuern von Zeitplänen und/oder der Zuweisung von Ressourcen für Wartungs- und/oder Reinigungsprogramme gemäß dem zweiten Plan.

14. System zur Optimierung von Infrastruktur, umfassend:
a. einen Empfänger zum:
Empfangen von einem oder mehreren Prioritätsparametern zur Berücksichtigung für die Optimierung
wobei jeder der Prioritätsparameter sich auf einen Zielaspekt der Infrastruktur bezieht, der mit einer oder mehreren Funktionen der Infrastruktur verknüpft ist, und eine Gewichtung umfasst;
Empfangen eines bestehenden, ersten Optimierungsplans von einem bestehenden, ersten Optimierungssystem,
wobei die erste Optimierung Daten in Bezug auf den bzw. die Zielaspekt(e) umfasst;
b. einen Prozessor zum Erzeugen eines empfohlenen, zweiten Optimierungsplans durch ein zweites Optimierungssystem,
wobei der zweite Optimierungsplan durch Modifizieren des ersten Optimierungsplans, um den bzw. die Zielaspekt(e) gemäß der bzw. den Gewichtung(en) zu optimieren, unter Verwendung eines Vorhersagemoduls (300), das ein oder mehrere Modelle (312) umfasst, erzeugt wird;
c. einen Sender zum Übertragen des zweiten Optimierungsplans von dem zweiten Optimierungssystem an das erste Optimierungssystem zum Aktualisieren des ersten Optimierungsplans auf Basis des zweiten Optimierungsplans.

15. Vorhersagemodul (300) zur Verwendung im Verfahren nach einem der Ansprüche 8 bis 13 oder im System nach Anspruch 14,
wobei das Vorhersagemodul eine Mehrzahl von Modellen des maschinellen Lernens (312) umfasst,
eine Mehrzahl von Modellen des maschinellen Lernens (312) umfasst,
jedes der Modelle des maschinellen Lernens mit einer oder mehreren Datenquellen (310) verbunden ist und zum Durchführen einer Vorhersage (314) von einer oder mehreren Folgen einer oder mehrerer Entscheidungen auf Basis von historischen Daten aus der einen oder den mehreren Datenquellen trainiert ist, und
die von den Modellen des maschinellen Lernens vorhergesagte(n) eine oder mehreren Folgen sich auf eine Mehrzahl von Funktionen der Infrastruktur beziehen;
vorzugsweise wobei der zweite Optimierungsplan aus einem oder mehreren Kandidaten für zweite Optimierungspläne, die die Prioritätsparameter erfüllen, auf Basis der einen oder mehreren Entscheidungen und der Folgen gemäß der Vorhersage durch die Modelle des maschinellen Lernens ausgewählt wird und/oder
wobei der zweite Optimierungsplan mit den wenigsten negativen Folgen gemäß den Vorhersagen durch die Modelle des maschinellen Lernens verknüpft ist.

16. Computerprogrammprodukt, das bei Ausführung das Verfahren nach einem der Ansprüche 8 bis 13 durchführt.

## Revendications

1. Procédé d'optimisation de planification de postes de stationnement comprenant les étapes consistant à :
a. recevoir un ou plusieurs paramètres de priorité à prendre en compte dans la planification de postes de stationnement,
dans lequel chacun des paramètres de priorité comprend une pondération, et est associé à une ou plusieurs fonctions d'aéroport ;
b. recevoir un premier plan de postes de stationnement existant d'un premier système d'optimisation de planification de postes de stationnement existant (1126),
dans lequel le premier plan de postes de stationnement comprend des données se rapportant à des vols et à leurs postes de stationnement affectés ;
c. générer un deuxième plan de postes de stationnement recommandé par un deuxième système d'optimisation de planification de postes de stationnement (1104),
dans lequel le deuxième plan de postes de stationnement est généré en modifiant le premier plan de postes de stationnement afin d'affecter des postes de stationnement aux vols conformément aux paramètres de priorité, en utilisant un module de prédiction (300) comprenant un ou plusieurs modèles (312) ;
d. transmettre le deuxième plan de postes de stationnement du deuxième système d'optimisation de planification de postes de stationnement (1104) au premier système d'optimisation de planification de postes de stationnement (1126) ; et
e. mettre à jour le premier plan de postes de stationnement sur la base du deuxième plan de postes de stationnement.

2. Procédé selon la revendication 1,
dans lequel une ou plusieurs règles existantes se rapportant à l'une ou plusieurs fonctions d'aéroport sont extraites avant l'étape de génération du deuxième plan de postes de stationnement, et dans lequel le deuxième plan de postes de stationnement est généré pour éviter des conflits avec les règles existantes ; et/ou
dans lequel l'une ou plusieurs règles existantes se rapportant à l'une ou plusieurs fonctions de l'aéroport sont extraites d'une base de données extérieure associée à l'aéroport et/ou
dans lequel l'un ou plusieurs paramètres de priorité sont extraits d'une base de données basée sur des règles associée à l'aéroport ; et/ou
dans lequel l'un ou plusieurs paramètres de priorité sont extraits via une entrée utilisateur ou d'une base de données.

3. Procédé de priorisation de l'un ou plusieurs paramètres de priorité dans le procédé selon l'une quelconque des revendications 1 à 5,
dans lequel la pondération de chacun des paramètres de priorité est ajustable dynamiquement par l'utilisateur ;
de préférence dans lequel pendant l'ajustement de la pondération, des changements de l'une ou plusieurs fonctions d'aéroport du paramètre correspondant sont affichés à l'utilisateur, et/ou dans lequel les changements de l'une ou plusieurs fonctions d'aéroport du paramètre correspondant sont affichés sous forme de sous-paramètres ayant des valeurs numériques.

4. Procédé selon l'une quelconque des revendications précédentes, comprenant en outre une étape consistant à :
f. transmettre des directions pour contrôler un aéronef vers un poste de stationnement conformément au deuxième plan.

5. Système d'optimisation de planification de postes de stationnement comprenant :
a. un récepteur pour
recevoir un ou plusieurs paramètres de priorité à prendre en compte dans la planification de postes de stationnement,
dans lequel chacun des paramètres de priorité comprend une pondération, et est associé à une ou plusieurs fonctions d'aéroport, et
recevoir un premier plan de postes de stationnement existant d'un premier système d'optimisation de planification de postes de stationnement existant (1126),
dans lequel le premier plan de postes de stationnement comprend des données se rapportant à des vols et à leurs postes de stationnement affectés ;
b. un processeur pour recevoir un deuxième plan de postes de stationnement recommandé par un deuxième système d'optimisation de planification de postes de stationnement (1104),
dans lequel le deuxième plan de postes de stationnement est généré en modifiant le premier plan de postes de stationnement afin d'affecter des postes de stationnement aux vols conformément aux paramètres de priorité, en utilisant un module de prédiction (300) comprenant un ou plusieurs modèles (312) ; et
c. un émetteur pour transmettre le deuxième plan de postes de stationnement du deuxième système d'optimisation de planification de postes de stationnement (1104) au premier système de planification de postes de stationnement (1126) pour mettre à jour le premier plan de postes de stationnement sur la base du deuxième plan de postes de stationnement.

6. Module de prédiction (300) pour utilisation dans le procédé selon l'une quelconque des revendications 1 à 4 ou dans le système selon la revendication 5,
où le module de prédiction comprend une pluralité de modèles d'apprentissage machine (312),
chacun des modèles d'apprentissage machine est connecté à une ou plusieurs sources de données (310), et est entraîné pour prédire (314) une ou plusieurs conséquences d'une ou de plusieurs décisions sur la base de données historiques d'une ou plusieurs sources de données, et
l'une ou plusieurs conséquences prédites par les modèles d'apprentissage machine se rapportent à une pluralité de fonctions d'aéroport ;
de préférence dans lequel le deuxième plan de postes de stationnement est sélectionné parmi un ou plusieurs deuxièmes plans de postes de stationnement candidats qui répondent aux paramètres de priorité, sur la base de l'une ou plusieurs décisions et des conséquences conformément à la prédiction par les modèles d'apprentissage machine, et/ou dans lequel le deuxième plan de postes de stationnement est associé aux conséquences négatives les moins nombreuses conformément aux prédictions par les modèles d'apprentissage machine.

7. Produit de programme informatique qui, lorsque exécuté, met en œuvre le procédé selon l'une quelconque des revendications 1 à 4.

8. Procédé d'optimisation d'infrastructure comprenant les étapes consistant à :
a. recevoir un ou plusieurs paramètres de priorité à prendre en compte dans l'optimisation,
dans lequel chacun des paramètres de priorité se rapporte à un aspect cible de l'infrastructure associé à une ou plusieurs fonctions de l'infrastructure et comprend une pondération ;
b. recevoir un premier plan d'optimisation existant d'un premier système d'optimisation existant,
dans lequel la première optimisation comprend des données se rapportant à un/des aspects cibles ;
c. générer un deuxième plan d'optimisation recommandé par un deuxième système d'optimisation,
dans lequel le deuxième plan d'optimisation est généré en modifiant le premier plan d'optimisation afin d'optimiser le/les aspects cibles conformément à la/aux pondérations, en utilisant un module de prédiction (300) comprenant un ou plusieurs modèles (312) ;
d. transmettre le deuxième plan d'optimisation du deuxième système d'optimisation au premier système d'optimisation ; et
e. mettre à jour le premier plan d'optimisation sur la base du deuxième plan d'optimisation.

9. Procédé selon la revendication 8,
dans lequel une ou plusieurs règles existantes se rapportant à l'une ou plusieurs fonctions de l'infrastructure sont extraites préalablement à l'étape de génération du deuxième plan d'optimisation, et dans lequel le deuxième plan d'optimisation est généré pour éviter des conflits avec les règles existantes ; et/ou
dans lequel l'une ou plusieurs règles existantes se rapportant à l'une ou plusieurs fonctions de l'infrastructure sont extraites d'une base de données extérieure associée à l'infrastructure.

10. Procédé selon l'une quelconque des revendications précédentes, dans lequel l'un ou plusieurs paramètres de priorité sont extraits d'une base de données basée sur des règles associée à l'infrastructure.

11. Procédé selon l'une quelconque des revendications 1 à 4 et 8 à 10, dans lequel l'un ou plusieurs paramètres de priorité sont extraits via une entrée utilisateur ou d'une base de données.

12. Procédé de priorisation de l'un ou plusieurs paramètres de priorité dans le procédé selon l'une quelconque des revendications 8 à 11, dans lequel la pondération de chacun des paramètres de priorité est ajustable dynamiquement par l'utilisateur ;
de préférence dans lequel pendant l'ajustement de la pondération, des changements de l'une ou plusieurs fonctions de l'infrastructure du paramètre correspondant sont affichés à l'utilisateur, et/ou
dans lequel les changements de l'une ou plusieurs fonctions d'aéroport du paramètre correspondant sont affichés sous forme de sous-paramètres ayant des valeurs numériques.

13. Procédé selon l'une quelconque des revendications 8 à 11, comprenant en outre une étape consistant à :
f. transmettre des directions pour l'un quelconque ou plusieurs d'entre :
contrôler un aéronef vers un poste de stationnement conformément au deuxième plan ;
contrôler l'affectation de pistes de sécurité conformément au deuxième plan ;
contrôler l'ouverture et/ou l'affectation de ressources à une ou plusieurs zones de l'infrastructure conformément au deuxième plan ;
contrôler des heures pour une ou plusieurs annonces d'information conformément au deuxième plan ;
contrôler l'acheminement pour un ou plusieurs utilisateurs de l'infrastructure conformément au deuxième plan ;
contrôler l'utilisation d'énergie dans une ou plusieurs zones de l'infrastructure conformément au deuxième plan ; et/ou
contrôler des programmes et/ou l'affectation de ressources pour des programmes de maintenance et/ou de nettoyage conformément au deuxième plan.

14. Système d'optimisation d'infrastructure comprenant :
a. un récepteur pour
recevoir un ou plusieurs paramètres de priorité à prendre en compte pour l'optimisation,
dans lequel chacun des paramètres de priorité se rapporte à un aspect cible de l'infrastructure associé à une ou plusieurs fonctions de l'infrastructure et comprend une pondération
recevoir un premier plan d'optimisation existant d'un premier système d'optimisation existant,
dans lequel la première optimisation comprend des données se rapportant à l'aspect/aux aspects cibles ;
b. un processeur pour générer un deuxième plan d'optimisation recommandé par un deuxième système d'optimisation,
dans lequel le deuxième plan d'optimisation est généré en modifiant le premier plan d'optimisation afin d'optimiser le/les aspects cibles conformément à la/aux pondérations, en utilisant un module de prédiction (300) comprenant un ou plusieurs modèles (312) ; et
c. un émetteur pour transmettre le deuxième plan d'optimisation du deuxième système d'optimisation au premier système d'optimisation pour mettre à jour le premier plan d'optimisation sur la base du deuxième plan d'optimisation.

15. Module de prédiction (300) pour utilisation dans le procédé selon l'une quelconque des revendications 8 à 13 ou dans le système selon la revendication 14,
où le module de prédiction comprend une pluralité de modèles d'apprentissage machine (312),
chacun des modèles d'apprentissage machine est connecté à une ou plusieurs sources de données (310), et est entraîné pour prédire (314) une ou plusieurs conséquences d'une ou plusieurs décisions sur la base de données historiques de l'une ou plusieurs sources de données, et
l'une ou plusieurs conséquences prédites par les modèles d'apprentissage machine se rapportent à une pluralité de fonctions de l'infrastructure ;
de préférence dans lequel le deuxième plan d'optimisation est sélectionné parmi un ou plusieurs deuxièmes plans d'optimisation candidats qui répondent aux paramètres de priorité, sur la base de l'une ou plusieurs décisions et des conséquences conformément à la prédiction par les modèles d'apprentissage machine, et/ou
dans lequel le deuxième plan d'optimisation est associé aux conséquences négatives les moins nombreuses conformément aux prédictions par les modèles d'apprentissage machine.

16. Produit de programme informatique qui, lorsque exécuté, met en œuvre le procédé selon l'une quelconque des revendications 8 à 13.
